Europäisches Patentamt

European Patent Office

Office européen des brevets

(11) Veröffentlichungsnummer: **0 243 747 B1**

(12) **EUROPÄISCHE PATENTSCHRIFT**

(45) Veröffentlichungstag der Patentschrift: 08.05.91

(51) Int. Cl.⁵: **B03B 9/06, B07B 9/00**

(21) Anmeldenummer: 87105208.0

(22) Anmeldetag: 08.04.87

(54) Verfahren und Vorrichtung zur Aufbereitung von Haushalts-, Gewerbe- und anderen dergleichen Abfällen.

(30) Priorität: 28.04.86 DE 3614325

(43) Veröffentlichungstag der Anmeldung:
04.11.87 Patentblatt 87/45

(45) Bekanntmachung des Hinweises auf die
Patenterteilung:
08.05.91 Patentblatt 91/19

(84) Benannte Vertragsstaaten:
AT BE CH DE ES FR GB GR IT LI LU NL SE

(56) Entgegenhaltungen:
DE-C- 3 105 597
US-A- 4 098 464
US-A- 4 270 470

CONSERVATION & RECYCLING, Band 1, Nr.
1, 1976, Seiten 3-17, Pergamon Press, Oxford, GB; M.E. HENSTOCK: "The scope for
materials recycling"

AUFBEREITUNGS-TECHNIK, Band 24, Nr. 12,
Dezember 1983, Seiten 710-713, Wiesbaden,
DE; ETH F.J. WYSS et al.: "Energie-Recycling
durch Pelletisierung kalorisch hochwertiger
Komponenten aus kommunalen Abfällen am
Beispiel der Anlage Eastbourne/GB"

(73) Patentinhaber: ORGAN-FASER TECHNOLOGY
COMPANY N.V.
de Ruyterkade 62 P.O. Box 812
Curaçao(AN)

(72) Erfinder: Frei, Josef
Römerweg 32
CH-5422 Oberehrendingen(CH)

(74) Vertreter: Körber, Wolfhart, Dr.rer.nat. et al
Patentanwälte Dipl.-Ing. H. Mitscherlich
Dipl.-Ing. K. Gunschmann Dr.rer.nat. W. Körber Dipl.Ing. J. Schmidt-Evers Dipl.-Ing. W.
Melzer Steinsdorfstrasse 10
W-8000 München 22(DE)

## Beschreibung

Die Erfindung bezieht sich auf ein Verfahren zur Aufbereitung von Haushalts-, Gewerbe- und anderen dgl. Abfällen sowie eine Vorrichtung zur Durchführung des Verfahrens nach dem Oberbegriff des Anspruchs 1.

Ein solches Verfahren und eine solche Vorrichtung sind in der DE-PS 31 05 597 beschrieben und dargestellt. Bei dem bekannten Verfahren wird neben einer aus magnetischen Metallen bestehenden Fraktion und einer Granulat-Fraktion wenigstens eine Leichtfraktion aus den Abfällen gebildet, die alle Verfahrensstufen durchlaufen und erst am Ende des Verfahrens entsteht. Da in vorliegenden Abfällen die leichten Bestandteile den größten Anteil der Abfälle ausmachen, wobei zu berücksichtigen ist, daß Papiere und Verpackungsmaterialien ca. 40 % des Abfalls ausmachen, ist das bekannte Verfahren mit einem erheblichen Arbeits-, Energie-, und Zeitaufwand und somit erheblichen Betriebskosten verbunden, was den Preis für die Fraktionen verteuert.

Aus CONSERVATION & RECYCLING, Bd. 1, Nr. 1 (1976) 3 bis 17, Pergamon Press, Oxford, GB, M.E. Henstock ist ein Verfahren zur Abtrennung von leichten Abfallstoffen wie Papier und Plastik von den übrigen Abfallbestandteilen bekannt. Bei diesem Verfahren können die leichten Abfälle in einem alternativen Verfahrensschritt einem zweiten Zerkleinerer und einer zweiten Windsichtung unterworfen werden. Der Erfindung liegt die Aufgabe zugrunde, ein Verfahren der eingangs bezeichneten Art sowie eine Vorrichtung zur Durchführung dieses Verfahrens zu vereinfachen, insbesondere den erforderlichen Aufwand zu verringern.

Diese Aufgabe wird durch die kennzeichnenden Merkmale der Ansprüche 1 bzw. 6 gelöst.

Beim erfindungsgemäßen Verfahren wird wenigstens eine weitere Fraktion geschaffen, die auch unter Umgehung aufwendiger Fraktionierungsmaßnahmen den gestellten bzw. besonderen Anforderungen entspricht. Die Erfindung geht dabei von der Erkenntnis aus, daß ein beträchtlicher Teil des Abfalls spätestens nach einer Vorzerkleinerung den an die gewünschten Fraktionen gestellten Anforderungen entspricht. Das erfindunsgemäße Verfahren und die erfindungsgemäße Vorrichtung ermöglichen es, diesen Anteil aus dem Verfahrensablauf nach der Windsichtung und schon vor der schneidenden Nachzerkleinerung auszusondern und direkt oder mittelbar über einen weiteren Zerkleinerer der Wiederverwertung zuzuführen. Für die hierdurch geschaffene zusätzliche Fraktion bedarf es somit keiner aufwendigen Weiterbehandlung im Sinne des bekannten Verfahrens, wodurch die angestrebte Vereinfachung und Kostenersparnis erreicht wird.

In dem Fall, in dem zumindest zeitweise die Bestandteile des Abfalls den Anforderungen von vorneherein entsprechen, kann jeweils der Gesamtstrom dem Verfahrensablauf entnommen und im erfindungsgemäßen Sinne behandelt werden, wodurch der beim bekannten Verfahren in einem solchen Fall auftretende unnötige Aufwand der Behandlung ansich schon den Anforderungen entsprechender Abfallbestandteile entfällt.

Es hat sich bei Versuchen gezeigt, daß die den Anforderungen entsprechenden Bestandteile der Abfalls vor der Trocknung ausgesondert werden können. Dies wird durch die Aussonderung durch die Windsichtung ermöglicht, bei der klebende Bestandteile als "schwere Fraktion" ermittelt und deshalb nicht ausgesondert wird, so daß die ausgesonderte Fraktion nur eine verhältnismäßig geringe Feuchte aufweist. Bei Versuchen werden ca. 18 bis 20 % ermittelt.

Ein weiterer Vorteil der erfindungsgemäßen Maßnahmen besteht darin, daß die Winsichtung eine automatische Regelung der auszusondernden Menge der den Anforderungen schon entsprechenden Bestandteile des Abfalls umfaßt, so daß in den meisten Fällen keiner besonderen Regelung dieser Menge bedarf.

Bei der erfindungsgemäßen Ausgestaltung wird die zusätzliche Fraktion wahlweise direkt der Weiterverwertung und/oder einer weiteren Zerkleinerung zugeführt, wodurch wahlweise eine grobfaserige und feinfaserige Fraktion geschaffen wird. Beide Fraktionen können wahlweise direkt der Wiederverwertung sowohl ohne als auch unter einer Weiterbehandlung zugeführt werden.

Die erfindunsgemäße Vorrichtung ermöglicht die Durchführung des erfindungsgemäßen Verfahrens mit einfachen und kostengünstigen Mitteln. In dem Fall, in dem eine feinfaserige Struktur der zusätzlichen Fraktion gewünscht wird, ist zwar ein zusätzlicher Zerkleinerer vorzugsweise in Form einer Hammermühle erforderlich, jedoch ist dieser Aufwand bedeutend geringer als der sich aus dem bekannten Verfahren und der bekannten Vorrichtung ergebende Betriebsaufwand. Es wird bei den bekannten weiteren Aufbereitungsaggregaten, insbesondere bei der Trocknung eine große Menge Energie eingespart, und es können auch die weiteren Aufbereits...saggregate für eine geringere Kapazität au... ...gt werden, wodurch die Herstellungs... ... Betriebskosten der Vorrichtung erheblich g.... ... werden können.

In den ...ransprüchen sind vorteilhafte Weiterbildungen der Erfindung beschrieben. Hierzu wird hervorgehoben, daß die abgezweigte Leichtfraktion eine optimale Pressfeuchtigkeit aufweist, weshalb sie sich sehr gut zu Briketts oder Pellets pressen läßt. Außerdem wird durch die zweite Nachzerkleinerung eine Feinfraktion erhalten, die sich sowohl gepreßt als auch ungepreßt zur Weiterverarbeitung bei der Papierherstellung oder Vergasung (Verbrennung, Biogasgewinnung, Pyrolyse) eignet.

Nachfolgend wird die Erfindung anhand eines in einer Zeichnung dargestellten Ausführungsbeispiels näher erläutert.

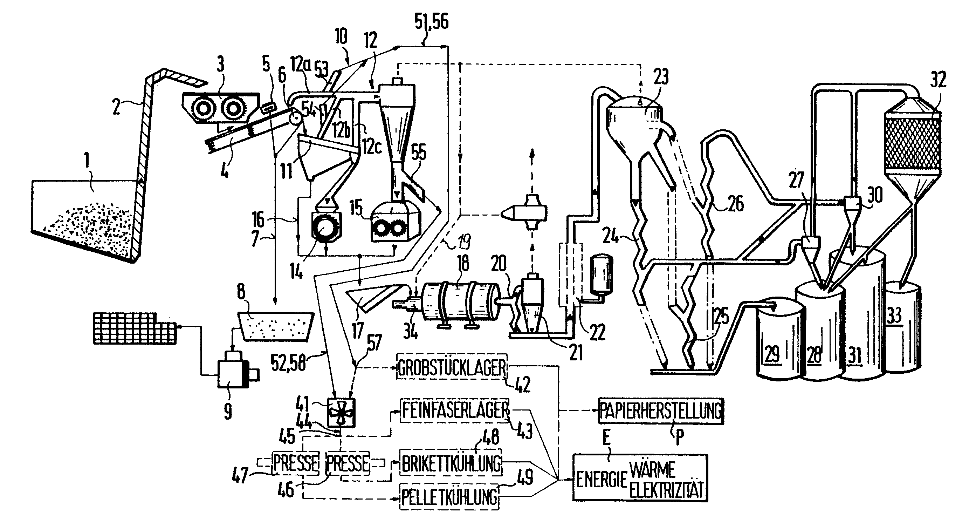

Die Zeichnung zeigt eine Vorrichtung zum Aufbereiten von Haushalts-, Gewerbe-, und anderen dgl. Abfällen. Die Abfälle werden in einen Sammelbunker I geschüttet. Vorzugsweise werden Abfälle verwendet, die keine oder nur eine kleine Gärzeit hinter sich haben und auch noch keiner Behandlung wie Vorzerkleinerung, Vorsortierung, Verdichtung auf Deponien oder chemischer Art unterworfen wurden. Die Verwendung von frischen organischen Abfällen hat den Vorteil, daß dem Faser-Ausgangsrohrstoff die gewünschte Struktur gegeben werden kann, und daß die wichtigen Bestandteile wie Zellulose und Lignin nicht entfernt bzw. zerstört wurden.

Die derart gebunkerten Abfälle gelangen über eine mechanische Transporteinrichtung 2 kontinuierlich oder diskontinuierlich zu einer Vorzerkleinerungseinheit 3. Diese hat die Aufgabe, einerseits den angelieferten Abfall in seine losen Bestandteile aufzulockern, und andererseits die in ihrer Größe und Zusammensetzung sehr stark veriierenden Abfälle durch Schneiden, Hacken und/oder Reißen auf eine für die Weiterverarbeitung zulässige Größe zu reduzieren. Für diesen Arbeitsvorgang können Schneid-oder Schlagmühlen sowie Hacker oder Reißer verwendet werden. Um eine störungsfreie Verarbeitung zu gewährleisten, und die gewünschte Struktur, Feinheit und Reinheit des Endproduktes zu erreichen, wird vorzugsweise eine langsam laufende Schneidemühle verwendet, die im Handel in verschiedenen Ausführungen erhältlich ist. Zweckmäßigerweise wird eine Ausführung mit nebeneinanderliegenden und gegeneinander laufenden Mehrmesserwellen eingesetzt. Zudem sollten die Mehrmesserwellen niedrigtourig und die einzelnen Wellen mit unterschiedlichen Drehzahlen arbeiten. Außerdem sollten sämtliche Wellen zur Gewährung von Sicherheit, Leistung und Selbstreinigung reversierbar sein. Eine solche Maschine ist im Handel unter der Bezeichnung "SHREDDER" erhältlich. Ähnliche Maschinen mit derselben Bezeichnung werden auch zur Zerkleinerung von alten Autos und anderen Blechwaren eingesetzt.

Der so durch die Vorzerkleinerungseinheit 3 zerlegte und auf eine Größe von etwa I00 mm vorzerkleinerte Abfall gelangt in freiem Fall auf eine aus einem vibrierenden Transportkanal bestehende Fördereinrichtung 4.

Um in den nachfolgenden Einrichtungen einen störungsfreien Betrieb zu gewährleisten ist es wichtig, daß im Abfall eventuell vorhandene Eisentteile gänzlich aussortiert werden. Um dies zu erreichen, befördert die Fördereinrichtung 4 den Abfall in Form einer gleichmäßig ausgerichteten, relativ dünnen Flußschicht an einer oberhalb der Fördereinrichtung 4 angeordneten Magnetbandeinheit 5 vorbei und wirft es an ihrem Ende auf einen untenliegenden, rotierenden Trommelmagneten 6. Da die aus der Vorzerkleinerungseinheit 3 austretenden Abfallmengen schwanken, ist die Fördereinrichtung 4 vor der Magnetbandeinheit 5 mit einer nicht dargestellten Egalisiereinrichtung versehen.

Die Magnetbandeinheit 5 hat die Aufgabe, die in der oberen Hälfte der Flußschicht sich befinden Eisenteile auszusortieren. Der rotierende Trommelmagnet 6 dient dazu, die in der unteren Hälfte der Abfall-Flußschicht liegenden Eisenteile zu entfernen.

Die Magneteinheiten 5 und 6 sind über eine Fördereinrichtung 7 mit einem Auffangbunker 8 verbunden. Vom Auffangbunker 8 gelangt das aussortierte Metall in eine Presse 9, welche die aussortierten Eisenteile zu handelsüblichen Pakten verpreßt, die anschließend einer Altmetallgießerei zugeführt werden können.

Der derart von Eisenteilen befreite Abfall wird darauf einer ersten Fraktioniereinheit I0 zugeführt. Die letztere weist ein Rüttelsieb II zur Erzielung einer Feinfraktion auf, wobei die Maschenweite dieses Siebes etwa 6 bis 8 mm beträgt. Ferner ist eine auf die Oberseite des Rüttelsiebes II gerichtete Absaugeinheit I2 zur Erzielung einer ersten, spezifisch leichten Großfraktion und am unteren Ende des geneigt angeordneten Rüttelsiebs II eine Aufnahmerinne I3 zur Aufnahme des auf dem Rüttelsieb II sich noch befindenden, wegen seiner Größe nicht durch das letztere hindurch gelangenden bzw. wegen seines Gewichtes nicht absaugbaren Gutes zur Erzielung einer ersten spezifisch schweren Fraktion angeordnet.

Die derartige Aufteilung in drei erste Fraktionen bewirkt den Vorteil, daß die nachfolgenden Zerkleinerungeinheiten I4 und I5 von denjenigen Feinteilen, die die erwünschte Endgröße nicht übersteigen, entlastet werden. Der Anteil dieser Feinteile beträgt normalerweise ungefähr I5 Gew.-%, d.h. es werden bei der nachfolgenden Zerkleinerung etwa I5 % Energie eingespart. Das derart aussortierte Feinmaterial wird über eine Bypaßleitung I6 unter Umgehung der beiden Zerkleinerungseinheiten I4 und I5 dem in den letzteren nachzerkleinerten Abfall wieder beigemischt.

Die Absaugeinheit I2 kann aus einem handelsüblichen Gerät bestehen, wie es z.B. in der Span- und Futtermittelindustrie eingesetzt wird. Das von der Absaugeinheit I2 über die Absaugkanäle I2a, I2b und I2c aus dem Abfall-Strom abgesaugte, spezifisch leichte Material besteht zur Hauptsache aus Papier, Karton, Folien, Textilien und Holzspänen, d.h. organischen Teilen, und wird zur letzten Strukturierung und Zerkleinerung der als Feinhacker ausgebildeten Zerkleinerungseinheit l5 zugeführt. Solche Zerkleinerungseinheiten sind im Handel unter dem Begriff Feinhacker, Zerspaner oder Feinmühlen erhältlich. Es hat sich dabei als zweckmäßig erwiesen, wenn Rotorzerkleinerer eingesetzt werden, bei denen Messerrotoren gegen Messerstatoren oder Messerrotoren gegen Messerrotoren arbeiten und die mit einer durchlässigen Sperre zur Erzielung der Endmaterialgröße versehen sind.

Die mittels von den Feinteilen und anderseits von den spezifisch leichten Teilen befreite, in der Praxis vorwiegend aus anorganischen Teilen bestehende, spezifisch schwere zweite Großfraktion wird in der separaten Zerkleinerungseinheit l4 einem granulierenden Zerkleinerungsvorgang unterworfen. Die Zerkleinerungseinheit l4 hat die Aufgabe, die hier anfallenden unterschiedlichen Abfallteile in die gewünschte und zur vollständigen Wiederverwertung erforderliche, einer Siebmaschenweite von ca. 6 mm entsprechende Endgröße zu bringen. Solche Zerkleinerungseinheiten l4 sind im Handel unter der Bezeichnung Hammer-, Prall- oder Schlagmühlen erhältlich und können eingesetzt werden, wenn sie eine auf die geringste zu erzielende Partikelgröße abgestimmte durchlässige Sperre haben.

Die aus den Zerkleinerungseinheiten l4 und l5 sowie der Bypaßleitung l6 anfallenden Fraktionen werden gemeinsam einem Auffangbehälter l7 zugeführt. Aus letzterem wird das gespeicherte Material einer Trocknungs- und Sterilisiereinheit l8 zugeführt. Diese Einheit l8 hat die Aufgabe, das anfallende Material auf eine bestimmte, gleichbleißende Restfeuchtigkeit zu trocknen und die im Material aus Gesundheitsgründen unerwünschten Stoffe wie z.B. pathogene Bakterien, zu vernichten. Zu diesem Zweck sind in der Trocknungs- und Sterilisiereinheit l8 Temperaturen von über 100°C erreichbar und die Aufenthaltszeit in der Trocknungs- und Sterilisiereinheit l8 ist ebenfalls regulierbar. Die Zufuhr heißer trockener Luft aus der Heizeinrichtung 34 über die Rezirkulationsleitung l9 und die Abfuhr der mit Feuchtigkeit angereicherten Luft erfolgt kontinuierlich und ist ebenfalls regulierbar um auf diese Weise die Restfeuchtigkeit des aus der Trocknungs- und Sterilisiereinheit l8 austretenden Materials auf einen gewünschten Wert einregulieren zu können.

Nach der Trocknungs- und Sterilisiereinheit l8 wird das derart behandelte Gut mittels einer Trennvorrichtung 20 in eine spezifisch leichte und in eine spezifisch schwere Fraktion aufgeteilt, und danach die spezifisch leichte Fraktion zur Abführung der vom Trocknungsprozeß herstammenden feuchten Abluft einem als Abscheidezyklon ausgebildeten Abluftabscheider 2l zugeführt. Das aus dem Abluftabscheider 2l austretende Material wird darauf wieder mit der vorher abgetrennten, spezifisch schweren Fraktion zusammengeführt und über eine Ozonbehandlungseinrichtung 22 einer weiteren Fraktioniereinheit 23 zugeführt. Die Letzere hat die Aufgabe, das anfallende auf einen bestimmten maximalen Restfeuchtigkeitsgehalt getrocknete und sterilisierte Material nach Partikelgröße in drei Zwischenfraktionen aufzuteilen, wobei die Stückgrößen der einen Zwischenfraktion kleiner als 3 mm², die Stückgrößen der zweiten Zwischenfraktion im Bereich von 3 bis 6 mm² und die Stückgrößen der dritten Zwischenfraktion über 6 mm² liegen. Die Fraktioniereinheit 23 kann vibrierende Arbeitsflächen aufweisen. Vorzugsweise wird eine in Leichtbauweise hergestellte Einrichtung mit vibrierender Arbeitsfläche verwendet. Die Amplitudenrichtung und die Schwingungszahl sollte variabel sein, damit die Intensität und die Aufenthaltszeit bezüglich Materialbehandlung reguliert werden kann.

Die aus der Fraktioniereinheit 23 abgegebenen drei Fraktionen, jede zusammengesetzt aus oranischen (vorwiegend leichten) und anorganischen (vorwiegend schweren) Partikeln werden auf getrennten Wegen der Endfraktionierung zugeführt. Zur Endfraktionierung dienen die Luftseparatoren 24, 25 und 26, welche die Aufgabe haben, die untereinander vermischten Rohstoffe wie Mineralien, Buntmetalle, Kunststoffe usw. von den organischen Stoffen zu trennen. Solche Luftseparatoren sind in verschiedenen Ausführungen im Handel erhältlich und werden ebenfalls in der Lebensmittel-, Futtermittel- und Holzindustrie verwendet.

Die aus der Fraktioniereinheit 23 ausgetragene Feinfraktion gelangt auf pneumatischen Weg zur Endfraktionierung in den Luftseparator 24, wo das Material an einer bestimmten Stelle in einen Gegenluftstrom eingegeben wird. Die Luftstromstärke ist so gewählt, daß die vorwiegend organischen, spezifisch leichten Partikel durch den Luftstrom weggetragen werden, und die vorwiegend anorganischen, spezifisch schwerden Partikel gegen den Luftstrom nach unten fallen.

Die weggetragenen Leichtteile werden einem Abscheidezyklon 27, der direkt als Siloeintrag auf dem Fasersilo 28 angeordnet ist, zugeleitet.

Die entgegen den Lufstrom nach unten fallenden, spezifsch schweren Teile, werden dem Granulatsilo 29 zugeführt.

Die aus der Fraktioniereinheit 23 anfallende, nach spezifischem Gewicht beurteilt zwischen der Fein- und der Großfraktion liegenden Fraktion wird zur Endfraktionierung dem Luftseparator 25 zugeführt. Die hier ausgeschiedenen, spezifisch leichten Teile können wahlweise den Abscheidern 27 oder 30 und den Silos 28 und 3l zugeleitet werden. Die im Luftseparator 25 anfallenden, vorwiegend anorganischen spezifisch schweren Granulate werden ebenfalls dem Granulatsilo 29 zugeführt.

Die aus der Fraktioniereinheit 23 auftretende Großfraktion wird für die Endfraktionierung dem Luftseparator 26 zugeleitet, der auf die gleiche Weise wie die beiden anderen Luftseparatoren 24 und 25 arbeitet. Die durch den Luftseparator 26 ausgeschiedenen, spezifisch leichten Teile werden ebenfalls wahlweise in die Silos 28 und 3l ausgetragen. Das durch den Luftseparator 26 ausgeschiedene, vorweigend anorganische, spezifisch schwere Granulat gelangt vermischt mit den Granulaten aus den Luftseparatoren 24 und 25 in das Granulasilo 29.

Die aus den Luftseparatoren 24, 25 und 26 sowie aus den Abscheidern 27 und 30 anfallende staubhaltige Abluft wird einer Filteranlage 32 zugeleitet. Der in der letzteren ausgeschiedene Staub, der vorwiegend aus organischen Feinpartikeln besteht, kann dem Staubsilo 33 oder wahlweise den Silos 28 und/oder 3l zugeführt werden.

Die Einlagerung der in drei vorwiegend Fasern enthaltenden Fraktionen und einer Staubfraktion anfallenden Endprodukte in voneinander getrennten Silos vereinfacht und erweitert die Weiterverwendungsmöglichkeiten.

Seblstverständlich können die aus den Luftseparatoren 24, 25 und 26 anfallenden, vorwiegend anorganischen, spezifisch schweren Granulate auch voneinander getrennt gelagert werden.

Das derart erhaltene Material kann z.B. zur Herstellung von Platten oder anderen Baumaterialien oder zu Heizzwecken zu Briketts oder Pellets weiterverarbeitet werden. Das derart hergestellte Material ist auch als Dünger und Bodenverbesserungsmittel sowie als Zuschlagstoff in Asbest-, Zement- und Ziegelprodukten sowie als Zuschlagstoff in Kunststeinen, Bitumenbelägen und Beton verwendbar.

Im Bereich zwischen der Absaugeinheit l2 und der schneidenden Zerkleinerungseinheit l5 wird dem Aufbereitungsprozess wenigstens ein Teilstrom der von der Absaugeinheit l2 aufgenommenen Leichtfraktion entnommen und unter Umgehung der vorbeschriebenen weiteren Aufbereitungsmaßnahmen entweder unmittelbar oder über eine weitere Zerkleinerungseinheit 4l, vorzugsweise eine Hammermühle mit schmalen Schlägern und Siebeinbau, um für die darin erzeugte Faserfraktion und den Schwerstoff Strukturengröße zu bestimmen, der weiteren Verwertung zugeführt, wozu zwei Lagerstellen 42, 43 zur Aufnahme der unmittelbar zugeführten Großfasern, nämlich Blattfasern bis zu einer Größe von l00 mm, und der durch die Zerkleinerungseinheit 4l nachzerkleinerten Feinfasern (im Millimeter-Bereich) vorgesehen sind.

Die die nachzerkleinerte Leichtfraktion aus der Zerkleinerungseinheit 4l abführende Fördereinrichtung 44 weist eine Weiche 45 auf, von der drei Fördereinrichtungen abzweigen und zwar zur Feinfaser-Lagerstelle 43, zu einer Brikettpresse 46 und zu einer Pelletpresse 47. In den Pressen 46, 47 wird die Leichtfraktion brikettiert bzw. pelletiert. Von der Brikettpresse 46 gelangen die Briketts zu einem Kühllager 48. Die Pellets gelangen von der Pelletpresse 47 zu einem mit 49 bezeichneten Kühllager, wo die Briketts bzw. Pellets auskühlen können.

Die Weiterverwertung erfolgt bei der Papierherstellung und/oder bei der Energieerzeugung in Verbrennungskraftwerken, was in der Zeichnung schematisch dargestellt ist.

Beim vorliegenden Ausführunsbeispiel werden dem Aufbereitungsprozess zwei an unterschiedlichen Stellen abzweigende Teil- oder auch Vollströme entnommen, von denen der eine mit 5l und der andere mit 52 bezeichnet ist. Der Teilstrom 5l zweigt im Bereich der Absaugeinheit l2 von den Absaugkanälen l2a und l2b der vorhandenen drei Absaugkanäle l2a, l2b und l2c ab, wozu Abzweigstücke 53, 54 bzw. Weichen vorgesehen sind. Der andere Teilstrom 52 geht von einem Abzweigstück 55 bzw. einer Weiche aus, das in der vorhandenen Fördereinrichtung zwischen der Absaugeinheit l2 und der schneidenden Zerkleinerungseinheit l5 angeordnet ist. Die den ersten Teilstrom 5l enthaltende Fördereinrichtung 56 weist eine Weiche 57 auf, mittels der die Großfaser-Fraktion wahlweise zur Großfaser-Lagerstelle 42 oder zur Zerkleinerungseinheit 4l befördert werden kann. Die den zweiten Teilstrom 52 enthaltende Fördereinrichtung 58 führt direkt zur Zerkleinerungseinheit 4l.

Im Rahmen der Erfindung ist es auch möglich, nicht nur einen oder mehrere Teilströme 5l, 52 sondern auch einen Gesamtstrom abzuzweigen, so daß die gesamte, von der Absaugeinheit l2 aufgenommene Leichtfraktion abgezweigt wird. Die Steuerung des Mengenstroms erfolgt aufgrund der Windsichtung bzw. Absaugung automatisch, wobei er sich nach der Größe des Anteils der Leichfraktion in den Abfällen richtet. Beim Vorhandensein eines großen Anteils leichter, flugfähiger Bestandteile in den Abfällen ist auch die von der Absaugeinheit l2 aufgenommene Menge groß, andernfalls klein.

Es ist jedoch auch möglich, Abzweigstücke 53 bis 55 zu verwenden, die eine Steuerung bzw. Regelung des Mengenstroms z.B. durch manuelle oder automatische Querschnittsverstellung ermöglichen.

Bei den vorbeschriebenen Fördereinrichtungen kann es sich um mechanische oder pneumatische Fördereinrichtungen handeln.

Die Abzweigung wenigstens eines Teils der Leichtfraktion führt zu folgenden Vorteilen.

Es wird eine weitere Wertstofffraktion geschaffen, die sich vorzüglich für die Papierherstellung und für die Energieerzeugung in Verbrennungskraftwerken eignet.

Die zusätzliche Wertstofffraktion läßt sich mit einem gegenüber den bekannten Fraktionen minimalen Kostenaufwand und somit wesentlich günstiger herstellen.

Es wurde ermittelt, daß die zusätzliche Wertstofffraktion im Vergleich mit den den gesamten Aufbereitsprozess durchlaufenden Fraktionen eine elektrische Energieeinsparung von ca. 50 % und eine Wärmeenergie-Einsparung von ca. 80 % ermöglicht. Es läßt sich auch eine Heizwertsteigerung der zusätzlichen Wertstofffraktion gegenüber den anderen Fraktionen erreichen, und zwar eine Heizwertsteigerung um ca. l0 bis l5%, die durch den erhöhten Kunststoffanteil bedingt ist.

Da der organische Wertstoffanteil im Hausmüll ca. 50 bis 70 % beträgt, ist es einleuchtend, daß die Betriebskosten für die Aufbereitung beträchtlich gesenkt werden können, weil die Behandlungsmaßnahmen ab der Trocknungseinheit entweder erheblich reduziert sind oder ganz entfallen. Dabei ist zu berücksichtigen, daß mit der Absaugeinheit l2 der Hauptanteil der im Abfall enthaltenen leichten Bestandteile, nämlich ca. 80 bis 90 Gew.-% aufgenommen wird.

Im Rahmen der Erfindung ist es auch möglich, die zusätzliche Wertstofffraktion als Rohstoff bei der Biogas-Gewinnung zu verwerten.

## Ansprüche

1. Verfahren zur Aufbereitung von Haushalts-, Gewerbe-und anderen dgl. Abfällen zwecks Gewinnung eines Faser- und/oder Granulatmaterials,
   bei welchem das Abfallmaterial einer Vorzerkleinerung (3), einer Magnetscheidung (5), einer Sichtung (19), einer Trocknung (18) und Fraktionierung (23) unterworfen wird,
   wobei die bei der im Anschluß an die Magnetscheidung in einer Absaugeinheit (12) durchgeführten Sichtung anfallende Leichtfraktion einer schneidenden und die anfallende Schwerfraktion einer vorwiegend granulierenden Nachzerkleinerung (14, 15) unterworfen und danach die beiden Zerkleinerungsprodukte wieder zusammengeführt, getrocknet und in Fasergut und Granulat fraktioniert werden,
   dadurch gekennzeichnet,
   daß vor der Absaugeinheit (12) in einem der Absaugkanäle (12a, 12b) ein erster Teilstrom oder der Gesamtstrom (51) des betreffenden Absaugkanales (12a, 12b) und/oder unmittelbar vor der scheidenden Nachzerkleinerungseinheit (15) ein zweiter Teilstrom oder der Gesamtstrom (52) der Leichtfraktion abgezweigt wird, wobei der erste Teil- oder Gesamtstrom (51) der Weiterverwertung unmittelbar oder nach Zerkleinerung in einer weiteren Zerkleinerungseinheit (41) der Weiterverwertung zugeführt und der zweite Teil- oder Gesamtstrom (52) der zweiten Nachzerkleinerungseinheit (41) zugeführt wird.

2. Verfahren nach Anspruch 1,
   dadurch gekennzeichnet,
   daß der Teil- oder Gesamtstrom bzw. der erste Teil-oder Gesamtstrom (51) einem Grobfaserlager (42) zugeführt wird.

3. Verfahren nach Anspruch 1 oder 2,
   dadurch gekennzeichnet,
   daß die aus der zweiten Nachzerkleinerungseinheit (41) gelangende Fraktion einem Feinfaserlager (43) und/oder einer Brikett- oder Pelletpresse (46, 47) zugeführt und zu Briketts und/oder Pellets verarbeitet wird.

4. Verfahren nach einem der Ansprüche 1 bis 3,
   dadurch gekennzeichnet,
   daß die im Teil- oder Gesamtstrom (51, 52) enthaltene Fraktion als Rohstoff bei der Papierherstellung oder bei der Energieerzeugung (Verbrennungskraftwerk, Biogasgewinnung) weiterverwertet wird.

5. Vorrichtung zur Durchführung des Verfahrens nach Anspruch 1, mit einem Vorzerkleinerer (3) zum Vorzerkleinern der Abfälle, einem Magentabscheider zum Abscheiden von magnetischen Metallen, einem Sichter (12), der aus einer Absaugeinheit mit mehreren Absaugkanälen besteht, einem schneidenden Nachzerkleinerer (15), einem granulierenden Nachzerkleinerer (14),
   dadurch gekennzeichnet,
   daß von wenigstens einem der Absaugkanäle (12a, 12b) eine erste Abzweigung (56, 58) für den ersten Teilstrom oder den Gesamtstrom (51) und/oder unmittelbar vor der schneidenden Nachzerkleinerungseinheit (15) eine zweite Abzweigung (58) für den zweiten Teilstrom oder den Gesamtstrom (52) der Leichtfraktion abzweigt und daß die erste Abzweigung (56) den Teil- oder Gesamtstrom (51, 52) unmittelbar unter Umgehung der weiteren Aufbereitungsmaßnahmen direkt oder über ein zweite Nachzerkleinerungseinheit (41) für die Weiterverwertung bereitstellt und die zweite Abzweigung über die zweite Nachzerkleinerungseinheit (41) mit einer der Weiterverwertung dienenden Einrichtung (42, 43, 48, 49) verbunden ist.

**6.** Vorrichtung nach Anspruch 5,
dadurch gekennzeichnet,
daß die erste Abzweigung (56) mit einem Grobfaser-Lager (42) verbunden ist.

**7.** Vorrichtung nach Anspruch 6,
dadurch gekennzeichnet,
daß die zweite Abzweigung (57) mit einem Feinfaser-Lager (43) und/oder einer Brikett- und/oder Pelletpresse (46, 47) verbunden ist.

**8.** Vorrichtung nach Anspruch 7,
dadurch gekennzeichnet,
daß die Brikett- und/oder Pelletpresse (46, 47) jeweils durch eine Fördereinrichtung mit einer Lagerstelle (48, 49) verbunden ist.

## Claims

**1.** A process for working up household, industrial and other similar waste for the recovery of a fibrous and/or granular material in which the waste material is subjected to primary comminution (3), magnetic separation (5), classification (19), drying (18) and fractionation (23), wherein the light and heavy fractions from the classification carried out in a suction unit (12) after the magnetic separation are subjected to secondary comminution (14, 15), the light fraction by cutting and the heavy fraction predominantly by granulation, and thereafter both comminution products are recombined, dried and fractionated into fibrous matter and granular material, characterised in that before the suction unit (12) in one of the suction passages (12a, 12b) a first part stream or the whole stream (51) of the said suction passage (12a, 12b) is diverted, and/or immediately before the secondary comminution cutting unit (15) a second part stream or the whole stream (52) of the light fraction is diverted, the first part or whole stream (51) being supplied, directly or after comminution in a further comminution unit (41), to further utilization and the second part or whole stream (52) being supplied to the second secondary comminution unit (41).

**2.** A process according to claim 1, characterised in that the part or whole stream, or the first part or whole stream (51) as the case may be, is fed to a coarse fibre store (42).

**3.** A process according to claim 1 or claim 2, characterised in that the fraction from the second secondary comminution unit (41) is fed to a fine fibre store (43) and/or a briquetting or pelleting press (46, 47) and is processed into briquettes and/or pellets.

**4.** A process according to any one of claims 1 to 3, characterised in that the fraction contained in the part or whole stream (51, 52) is further utilized as raw material in paper manufacture or in the production of energy (combustion power station, fermentation gas recovery).

**5.** A device for carrying out the process according to claim 1, having a primary comminutor (3) for primary comminution of the waste, a magnetic separator for separating magnetic metals, a classifier (12) which comprises a suction unit with several suction passages, a cutting secondary comminutor (15) and a granulating secondary comminutor (14), characterised in that at least from one of the suction passages (12a, 12b) there is a first branch (56, 58) for the first part stream or the whole stream (51) and/or directly before the cutting secondary comminution unit (15) there is a second branch (58) for the second part stream or the whole stream (52) of the light fraction and that the first branch (56) makes the part or whole stream (51, 52) immediately available for further utilization, by-passing the further working-up measures, either directly or via a second secondary comminution unit (41), and the second branch is connected via the second secondary comminution unit (41) to an arrangement (42, 43, 48, 49) serving the further utilization.

**6.** A device according to claim 5, characterised in that the first branch (56) is connected to a coarse fibre store (42).

**7.** A device according to claim 6, characterised in that the second branch (57) is connected to a fine fibre store (43) and/or a briquetting and/or pelleting press (46, 47).

**8.** A device according to claim 7, characterised in that the briquetting and/or pelleting press (46, 47) is connected in each case by a conveying arrangement to a storage place (48, 49).

## Revendications

**1.** Procédé de traitement de déchets ménagers, industriels et autres, en vue d'obtenir un matériau fibreux et/ou un matériau en granulat, dans lequel la matière résiduaire est soumise à un broyage préliminaire (3), à une séparation magnétique (5), à un tri (19), à un séchage (18) et à un fractionnement (23), dans lequel la fraction légère produite lors du tri effectué dans une unité d'aspiration (12) faisant suite à la séparation magnétique est soumise à un broyage secondaire (15) à effet de coupe et la fraction lourde produite est soumise à un broyage secondaire (14) ayant surtout un effet granulant, les deux produits du broyage étant ensuite à nouveau réunis, séchés et fractionnés en matériau fibreux et en granulat, **caractérisé** en ce que, en avant de l'unité d'aspiration (12), dans un des canaux d'aspiration (12a, 12b), un premier courant partiel ou bien le courant total (51) du canal d'aspiration correspondant (12a,12b) est dérivé, et/ou directement en avant de l'unité de broyage secondaire (15) à effet de coupe un deuxième courant partiel ou bien le courant total (52) de la fraction légère est dérivé, tandis que le premier courant partiel ou total (51) de la récupération secondaire est conduit directement ou après broyage dans une autre unité de broyage (41) de la récupération secondaire, et que le deuxième courant partiel ou total (52) est conduit à la deuxième unité de broyage secondaire (41).

2. Procédé selon la revendication 1, caractérisé en ce que le courant partiel ou total et/ou le premier courant partiel ou total (51) est conduit à un dépôt (42) pour grosses fibres.

3. Procédé selon la revendication 1 ou 2, caractérisé en ce que la fraction provenant de la deuxième unité de broyage secondaire (41) est conduite à un dépôt (43) pour fibres fines et/ou à un presse à briquettes ou à boulettes (46, 47) et est transformée en briquettes et/ou en boulettes.

4. Procédé selon une des revendications 1 à 3, caractérisé en ce que la fraction contenue dans le courant partiel ou total (51, 52) est récupérée comme matière première dans la fabrication de papier ou dans la production d'énergie (usine thermique, production de biogaz).

5. Dispositif de mise en oeuvre du procédé selon la revendication 1, comprenant un broyeur préliminaire (3) pour le broyage préliminaire des déchets, un séparateur magnétique pour la séparation des métaux magnétiques, un trieur (12) constitué d'une unité d'aspiration avec plusieurs canaux d'aspiration, un broyeur secondaire (15) à effet de coupe, un broyeur secondaire (14) granulant, **caractérisé** en ce que, à partir d'au moins un des canaux d'aspiration (12a, 12b) se détache une première dérivation (56, 58) pour le premier courant partiel ou pour le courant total (51) et/ou que, directement avant l'unité de broyage secondaire à effet de coupe (15) se détache une deuxième dérivation (58) pour le deuxième courant partiel ou pour le courant total (52) de la fraction légère, et en ce que la première dérivation (56) prépare directement le courant partiel ou total (51, 52) pour la récupération, en contournant les autres dispositions de traitement directement ou en passant par une deuxième unité de broyage secondaire (41), et en ce que la deuxième dérivation est reliée, par l'intermédiaire de la deuxième unité de broyage secondaire (41) à un dispositif (42, 43, 48, 49) servant à la récupération complémentaire.

6. Dispositif selon la revendication 5, caractérisé en ce que la première dérivation (56) est reliée à un dépôt (42) pour grosses fibres.

7. Dispositif selon la revendication 6, caractérisé en ce que la deuxième dérivation (57) est reliée à un dépôt (43) pour fibres fines et/ou à une presse à briquettes ou à boulettes (46, 47).

8. Dispositif selon la revendication 7, caractérisé en ce que la presse à briquettes ou à boulettes (46, 47) est reliée chaque fois à un lieu de stockage (48, 49) par un dispositif de transport.